# EUROPEAN PATENT APPLICATION

(11) **EP 4 738 193 A1**
(43) Date of publication of application: **06.05.2026**
(21) Application number: 24210026.1
(22) Date of filing: 31.10.2024
(51) Int. Cl.: G06N 3/045, G06N 3/0475, G06N 3/0895, G08G 1/00

(54) **COMPUTER IMPLEMENTED SYSTEM AND METHOD FOR GENERATING DATA SETS REPRESENTING TRAFFIC SCENARIOS**

(71) Applicant: Robert Bosch GmbH, 70442 Stuttgart (DE)
(72) Inventor: Yao, Yu, 52134 Herzogenrath (DE); Bhatnagar, Salil, 30519 Hannover (DE); Hallgarten, Marcel, 71139 Ehningen (DE)

(57) **Abstract**

The present invention is directed to a computer implemented system (100) and method for generating data sets (3) representing traffic scenarios to be used for training and/or testing automated driving (AD) functions. The system (100) comprises one or more processors and a memory that stores one or more programs that are configured to be executed by the one or more processors. Said programs comprise at least one first Large Language Model (LLM) and/or Vision Language Model (VLM) being trained at least on formatted text descriptions of traffic scenarios and on natural language to perform a task given a prompt.

Besides, said programs include instructions to
• Transform an initial data set (1) into a formatted text description of a corresponding real traffic scenario,
• Construct a first prompt (11) as input for the first LLM or VLM acting as modifier agent (10), wherein the first prompt (11) includes the formatted text description of said real traffic scenario and a user specification of a wanted modification of said real traffic scenario,
• Apply the first prompt to the modifier agent (10) and obtain a modified formatted text description of a modified traffic scenario as output ((12), and
• Transform the modified formatted text description into a corresponding data set (3) representing the modified traffic scenario.

## Description

### Technical field

Safety requirements for automated driving (AD) functions are very high in order to guarantee that vehicles using such driving systems always operate in a safe manner and do not cause any unnecessary and foreseeable accidents. Moreover, in dangerous traffic situations, the performance of such driving systems should be comparable to the behavior of a competent human driver who tries to avoid or at least minimize risk.

Nowadays, many AD functions use machine learning (ML) especially deep learning (DL) to handle the enormous variety of possible traffic scenarios. Consequently, the performance of such driving functions strongly depends on the amount and quality of training data used to learn an AD function. In this context, it is of utmost importance that the training data covers a large variety of traffic scenarios and situations. Besides, testing and evaluation of such AD functions is only meaningful and significant when carried out on data sets representing all kinds of different traffic scenarios and situations.

The choice of training and testing data depends heavily on the specific AD function being developed, the available resources, and the desired level of performance and safety. A comprehensive approach often utilizes a combination of data sources to ensure robustness and generalization to real-world scenarios.

Training and testing data for AD functions come from a diverse range of sources, each with its own strengths and weaknesses. They can be broadly categorized as follows:
- Real-world data: Collected from sensors on vehicles driving in real-world scenarios. This data is highly representative of real-world complexity, including unpredictable events and behavior and rare edge cases, but is expensive and time-consuming to collect, label, and curate. Privacy concerns are also a significant factor.
- Simulated data: Generated using simulation environments that recreate real-world physics and sensor models. This data is cost-effective, allows for controlled experimentation and testing of edge cases, and avoids privacy issues. However, it can struggle to fully capture the complexity and unpredictability of the real world, leading to a "reality gap."
- Synthetic data: Artificially generated data that may or may not be based on real-world scenarios. It's useful for augmenting existing datasets, creating specific scenarios, and addressing class imbalances. However, it needs careful validation to ensure relevance and avoid introducing biases.

Hybrid approaches combine multiple data sources to leverage the strengths of each. For instance, using real-world data for common scenarios and simulated data for rare edge cases. This is becoming increasingly common as a way to achieve robust and reliable performance.

Within these categories, the training and testing data can further be classified by:
- Sensor modality, i.e. camera, LiDAR, radar, GPS, IMU, etc.
- Scenario coverage, i.e. urban, highway, rural, different weather conditions, etc.
- Labeling quality: Manually labeled, semi-supervised, or unsupervised.

In most cases the sensor data collected from real world scenarios have to be preprocessed to transform this data into input data for the AD function to be trained or tested. This preprocessing is crucial since it have to transform raw, noisy, and heterogeneous data into a consistent, manageable, and informative format still representing the initial real-world scenario. Common preprocessing steps are:
- Sensor calibration to correct distortions and inaccuracies inherent in individual sensors e.g., camera lens distortion, LiDAR reflectivity variations,
- Sensor synchronization to align data streams from different sensors in time and space,
- Data cleaning, filtering and noise removal,
- Data transformation to convert data between different coordinate systems e.g., sensor coordinates to vehicle coordinates, or to a global map frame,
- Feature extraction to extracts relevant features from the raw data. For images, this could involve object detection, lane detection, or semantic segmentation. For LiDAR, it might involve ground plane removal, point cloud clustering, or generating occupancy grids.
- Data formatting to convert data into a suitable format for the chosen machine learning framework e.g., creating tensors for deep learning models.

Although large amounts of data sets have been collected when driving in real-world traffic, there is still the need for more training and testing data, e.g. in order to increase the coverage of different traffic scenarios.

The present invention aims to automatically generate data sets representing significant traffic scenarios to be added to the training data and/or testing data of an AD function. The proposed method starts with a data set representing a real traffic scenario, i.e. which has been collected from real-world traffic. This real-world data set is then modified and/or augmented automatically such that it represents a well-defined modification of the initial real traffic scenario. Therefore, the present invention makes use of at least one Large Language Model (LLM) or Vision Language Model (VLM) to control the modification via natural language.

### Technical background

An LLM is a neural transformer model with attention. A neural transformer model with attention is one distinct type of machine learning model. Machine learning pertains to the use and development of computer systems that are able to learn and adapt without following explicit instructions by using algorithms and statistical models to analyze and draw inferences from patterns in data. Machine learning uses different types of statistical methods to learn from data and to predict future decisions. Traditional machine learning includes classification models, data mining, Bayesian networks, Markov models, clustering, and visual data mapping. Deep learning differs from traditional machine learning since it uses multiple stages of data processing through many hidden layers of a neural network to learn and interpret the features and the relationships between the features. Deep learning embodies neural networks which differs from the traditional machine learning techniques that do not use neural networks. Neural transformer models are one type of deep learning that utilizes an attention mechanism. Attention directs the neural network to focus on a subset of features or tokens in an input sequence thereby learning different representations from the different positions of the tokens in an input sequence. The neural transformer model handles dependencies between its input and output with attention and without using recurrent neural networks (RNN) (e g. long short-term memory (LSTM) network) and convolutional neural networks (CNN).

There are various configurations of a neural transformer model with attention. In one aspect the LLM is configured as an encoder-decoder neural transformer model with attention and in another aspect, the LLM is configured as a decoder neural transformer model with attention The encoder-decoder neural transformer model with attention consists of a series of stacked encoder blocks coupled to a series of stacked decoder blocks. The encoder blocks extract features from an input sequence to generate embeddings for each token in the input sequence, and the decoder uses the features to produce an output sentence representing code candidates. The decoder neural transformer model with attention consists of a series of stacked decoder blocks.

In case of the present invention, the LLM is pre-trained on formatted text descriptions of traffic scenarios and on natural language.

Examples of the neural transformer models with attention include OpenAl's GPT models and OpenAl's Codex model.

One preferred embodiment of the present invention makes use of LLM/VLM-based agentic design patterns. Agentic design involves creating one or more LLM/VLM-agents, e.g., by prompting or fine tuning a base LLM which takes the role of an LLM-agent specialized on a specific task. Through interaction of all LLM-agents, the system is able to solve a task which would be difficult for an LLM to solve in one step.

An overview of agentic design patterns, which might be implemented in the present invention is given in: Wu 2024, AutoGen: Enabling Next-Gen LLM Applications via Multi-Agent Conversation, https://arxiv.org/pdf/2308.08155 . AutoGen is an open-source framework designed to simplify the development of complex LLM applications by enabling multi-agent conversations. It features customizable and conversable agents powered by LLMs, humans or tools, allowing for modular combinations of capabilities.

### Disclosure of the invention

The invention is directed to a computer implemented system for generating data sets representing traffic scenarios to be used for training and/or testing automated driving (AD) functions. The system comprises at least one or more processors and a memory that stores one or more programs that are configured to be executed by the one or more processors. According to the invention said programs comprise at least one first Large Language Model (LLM) and/or Vision Language Model (VLM) being trained at least on formatted text descriptions of traffic scenarios and on natural language to perform a task given a prompt. Besides said one or more programs include instructions to
- Transform an initial data set into a formatted text description of a corresponding real traffic scenario,
- Construct a first prompt as input for the first LLM or VLM acting as modifier agent, wherein the first prompt includes the formatted text description of said real traffic scenario and a user specification of a wanted modification of said real traffic scenario,
- Apply the first prompt to the modifier agent and obtain a modified formatted text description of a modified traffic scenario as output, and
- Transform the modified formatted text description into a corresponding data set representing the modified traffic scenario.

The invention uses an LLM or VLM which is trained on formatted text descriptions of traffic scenarios and on natural language and works with prompting. The proposed way how to use this LLM or VLM allows fine-grained control when modifying a given real-world traffic scenario wherein this fine-grained control goes beyond specifying high-level scene parameters like traffic density or distribution of vehicle speeds or dimensions. Therefore, an initial data set is transformed into a formatted text description of the corresponding real traffic scenario before including this information in an input prompt of the LLM or VLM. Besides, a user specification of the wanted modification of said real traffic scenario is included in this input prompt, wherein this information is provided in form of natural language. This allows very detailed instructions regarding the positioning and removing of single traffic agents even in complex environments. Thus, the natural language interface enables the setting up of very specific traffic scenarios, which challenge current AD functions.

Furthermore, in the context of the present invention the LLM or VLM provides a modified formatted text description of a modified traffic scenario as output. This enables and/or facilitates the generation of a corresponding data set in any format appropriate for training and/or testing of AD functions.

For better performance, the LLM or VLM can be trained on any perception data in addition to formatted text descriptions of traffic scenarios and natural language. It can be further fine-tuned in a self-supervised fashion. The LLM or VLM may be hosted on an external server and accessed over a network through application programming interfaces (API). In another aspect, access to the LLM may be offered as a cloud service.

Further embodiments of the invention apply agentic design patterns to build a framework of interacting LLMs and/or VLMs for modification and/or augmentation of real-world traffic scenarios. In all these embodiments said one or more programs comprise a set of interacting LLMs and/or VLMs forming a framework. They are trained at least on formatted text descriptions of traffic scenarios and on natural language to perform a task given a prompt. They may be further trained on perception data and may be fine-tuned according to their specific agentic role in the framework. Anyway, these embodiments differ by the kind of framework and specific roles of the participating LLMs and VLMs.

In a preferred one of these embodiments said one or more programs include instructions to
- Construct a second prompt as input for a second LLM or VLM acting as quality assurance (QA) agent to evaluate the output of the modifier agent, wherein the second prompt includes the input and the output of the modifier agent and at least one quality criterion,
- Apply the second prompt to the QA agent and
- when the QA agent indicates that the quality criterion is not met,
   construct another first prompt for the modifier agent in order to further modify the formatted text description of the given real traffic scenario,
- or when the QA agent indicates that the quality criterion is met,
   transform the modified formatted text description into a corresponding data set representing the modified traffic scenario.

According to this embodiment at least one second LLM or VLM is provided acting as quality assurance (QA) agent which evaluates the output of the modifier agent. In case that the output of the modifier agent meets some given quality criterion the QA agents does not further intervene and the output of the modifier agent is transformed into a data set representing the corresponding modified traffic scenario.

However, in case that the output of the modifier agent does not meet the given quality criterion, a conversation between the QA agent and the modifier agent is started. Therefore, the QA agent automatically constructs another prompt for the modifier agent specifying the deficiencies of the modified scenario, especially with respect to the wanted modification. This prompt is then fed back to the modifier agent which, in response to this feedback prompt, further modifies its former output. This exchange between QA agent and modifier agent continues as long as the output of the modifier agent does not meet the given quality criterion, or until a maximum number of allowed rounds is reached.

Thus, the QA agent contributes essentially to a fine-grained control of scenario modification and guarantees the generation of data sets representing well-defined and significant traffic scenarios for training and/or testing of AD functions.

In another embodiment of the invention which uses a framework of interacting LLMs and/or VLMs said framework comprises at least one junior modifier agent specialized in at least one subtask of scenario modification. In this case the modifier agent is configured to
- analyze the first prompt in order to break down the corresponding task into several subtasks,
- distribute said subtasks to appropriately specialized junior modifier agents,
- merge the outputs of said junior modifier agents in order to generate a modified formatted text description of a modified traffic scenario as output.

According to this embodiment, the interaction takes place between a senior modifier agent and one or more junior modifier agents, which are each specialized on a specific kind of scenario modification, e.g. adding and removing pedestrians, adding and removing obstacles on the ego-lane, change weather conditions, etc.. In this case the senior modifier agent acts like a supervisor and coordinator, when analyzing the first prompt to identify subtasks which match to the specialization of the junior modifier agents. In order to distribute said subtasks within the framework, the senior modifier agent might generate prompts defining said subtasks and apply said prompts to the respective junior modifier agents. Eventually, the senior modifier agent merges the outputs of all contributing junior modifier agents to generate a formatted text description of a modified traffic scenario as output.

As an alternative or in addition, the set of interacting LLMs and/or VLMs may comprise a QA agent and at least one junior QA agent specialized in at least one subtask of evaluation. In this case the QA agent is configured to
- analyze the second prompt in order to break down the corresponding task into several subtasks,
- distribute said subtasks to appropriately specialized junior QA agents and
- merge the outputs of said specialized junior QA agents in order to check whether the quality criterion is met and to construct another first prompt for the modifier agent, if necessary.

According to this embodiment the interaction takes place between a senior QA agent and one or more junior QA agents which are each specialized on a specific kind of scenario evaluation, e.g. checking the number and positions of pedestrians, the positions and dimensions of obstacles on the ego-lane, weather conditions, etc.. In this case the senior QA agent acts like a supervisor and coordinator, when analyzing the second prompt to identify subtasks which match to the specialization of the junior QA agents. In order to distribute said subtasks within the framework the senior QA agent might generate prompts defining said subtasks and apply said prompts to the respective junior QA agents. Eventually, the senior QA agent merges the evaluation results of all contributing junior QA agents to generate an overall evaluation result and, if necessary, generates a feedback prompt for the modifier agent.

In all embodiments of the invention which use an agentic framework, the number of agents depends on the specific architecture and can be varied to trade-off performance vs. cost. E.g., for better performance, several QA-agents can be used, especially one senior QA-agent supervising several more specialized junior QA-agents, while for lower cost only one single QA-agent is used.

As mentioned above, the modifier agent is working on a formatted text description of an initial real traffic scenario. So, the initial data set taken from said real traffic scenario has to be transformed into a formatted text description first. In a preferred embodiment of the invention the system therefore comprises a first Neural Network (NN) which is trained at least on data of the kind of said initial data sets and on formatted text descriptions of traffic scenarios. Then, the one or more programs include instructions to access said first NN in order to transform an initial data set into a formatted text description of the corresponding real traffic scenario.

Besides, an input prompt for the modifier agent always comprises a language-based user specification of a wanted modification of said real traffic scenario. Such user specifications of wanted modifications may be stored in a given database to be accessed automatically for prompt construction. As an alternative or in addition embodiments of the present invention may comprise a human machine interface (HMI) to offer a kind of dialogue modus for a user to specify wanted modifications of a traffic scenario.

As mentioned above, the modifier agent provides a modified formatted text description of a modified traffic scenario as output. In a preferred embodiment of the invention the system comprises a second NN which is trained at least on data of the format needed for training and/or testing and on formatted text descriptions of traffic scenarios. Then, the one or more programs include instructions to access said second NN in order to transform the modifier agent's output into a data set representing the modified traffic scenario and having the right format.

In addition, the invention is directed to a computer implemented method for generating data sets representing traffic scenarios to be used for training and/or testing automated driving (AD) functions wherein at least one first Large Language Model (LLM) and/or Vision Language Model (VLM) is used for modification and/or augmentation of initial data sets representing real traffic scenarios and wherein said first LLM or VLM is trained at least on formatted text descriptions of traffic scenarios and on natural language to perform a task given a prompt. The claimed method comprises the following steps:
- Transforming an initial data set into a formatted text description of a corresponding real traffic scenario,
- Constructing a first prompt as input for the first LLM or VLM acting as modifier agent, wherein the first prompt includes the formatted text description of said real traffic scenario and a user specification of a wanted modification of said real traffic scenario,
- Applying the first prompt to the modifier agent and obtaining a modified formatted text description of a modified traffic scenario as output,
- transforming the modified formatted text description into a corresponding data set representing the modified traffic scenario.

Preferred embodiments of the claimed method use sets or frameworks of interacting LLMs and/or VLMs for modification and/or augmentation of initial data sets representing real traffic scenarios, wherein all LLMs and/or VLMs are trained at least on formatted text descriptions of traffic scenarios and on natural language to perform a task given a prompt. Each LLM and VLM of such a framework act as agents with a specific roles and might be fine-tuned accordingly.

In one of these preferred embodiments the claimed method further comprises the following steps:
- Constructing a second prompt as input for a second LLM or VLM acting as the quality assurance (QA) agent to evaluate the output of the modifier agent, wherein the second prompt includes the input and the output of the modifier agent and at least one quality criterion,
- Applying the second prompt to the QA agent and
- when the QA agent indicates that the quality criterion is not met, constructing another first prompt for the modifier agent in order to further modify the formatted text description of the given real traffic scenario,
- or when the QA agent indicates that the quality criterion is met,
   transforming the modified formatted text description into a corresponding data set representing the modified traffic scenario.

Another aspect of the present invention is the use of data sets generated by the claimed system and/or method for training and testing of AD functions, especially the prediction of future traffic scene development and behavior planning for single traffic participants. Therefore, the invention is also directed to a computer implemented method for training and/or testing automated driving (AD) functions, wherein data sets generated by a here claimed system and/or method are used as training data sets or evaluation and testing data sets. Besides, the invention is directed to a computer implemented automated driving (AD) function being trained, tested and/or evaluated on data sets generated by a here claimed system and/or method.

Embodiments of the invention will be discussed with reference to the following figures in more detail.
**Fig.** 1 illustrates a computer implemented system comprising an agentic framework for generating data sets according to the invention. It shows the different system components with respect to their function and interaction.
**Fig.** 2 illustrates an embodiment of the claimed method for generating data sets using an agentic framework.

### Description of the embodiments

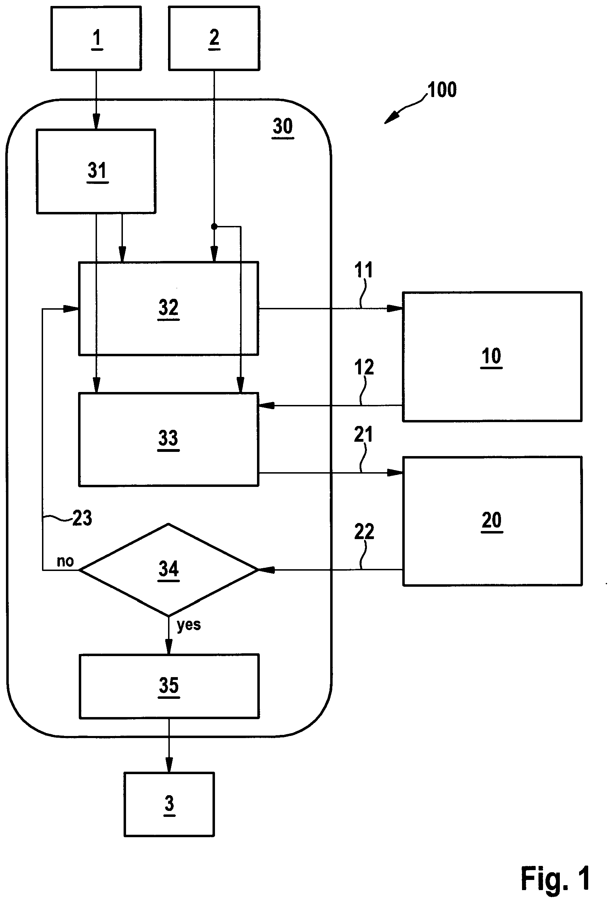

**Fig.** 1 is a diagram of a computer implemented system 100 for generating data sets representing traffic scenarios. The system 100 and the corresponding method are designed to generate data sets suited for training and testing of AD functions and especially to generate data sets representing significant traffic scenarios to complement real-world training and testing data.

In order to implement the functionality making up the invention, the system 100 comprises one or more processors and a memory that stores one or more programs that are configured to be executed by the one or more processors.

In the embodiment of Fig. 1 said programs comprise at least two interacting LLMs 10 and 20 which form an agentic framework. Each of this LLMs 10, 20 is trained at least on formatted text descriptions of traffic scenarios and on natural language to perform a task given a prompt. The first LLM 10 acts as modifier agent 10 while the second LLM 20 acts as QA agent 20.

Besides, the system 100 comprises a manger/moderator component 30 which comprises the following functionalities and corresponding program instructions:
- Transformation of an initial data set 1 representing an existing real traffic scenario into a formatted text description - functionality 31.
- Construction of a first prompt 11 as input for the modifier agent 10 and applying said first prompt 11 to the modifier agent 10 - functionality 32. The first prompt 11 includes the formatted text description of said real traffic scenario and a user specification of a wanted modification of said real traffic scenario. In the given example a language-based user prompt 2 specifies the wanted modification.
- Obtaining a modified formatted text description of a modified traffic scenario as output 12 of the modifier agent 10, construction of a second prompt 21 as input for the QA agent 20 to evaluate the output 12 of the modifier agent 10 and applying the second prompt 21 to the QA agent 20 - functionality 33. The second prompt 21 includes the input 11 and the output 12 of the modifier agent 10 and at least one quality criterion.
- Check the output 22 of the QA agent 20 to decide whether to jump back to functionality 32 or to move on to functionality 35 - functionality 34. E.g., if the QA agent provides a rating of how good the modified scenario meets the wanted scenario modification than this rating could be used as basis for decision.
   When jumping back to functionality 32 with feedback 23, another first prompt for the modifier agent 10 is constructed in order to further modify the formatted text description of the given real traffic scenario. This further input prompt for the modifier agent 10 might include information from feedback prompt 23, e.g. in which aspects the evaluated modified traffic scenario differs from the wanted modification.
- Transformation of the modified formatted text description into a corresponding data set representing the modified traffic scenario 3 - functionality 35.

The system 100 enables the generation of realistic scenarios by augmenting existing initializations via natural language prompts, such as: "add more traffic", "add a construction site on the ego lane, about 50 meters in front of ego". The initial data set might comprise map information and initial positions, velocities and goals of traffic participants, like vehicles, two-wheelers, pedestrians, objects and infrastructure. The here described system 100 takes as input i) an existing scenario and ii) a user prompt. It modifies the input scenario according to the user prompt by employing two interacting LLM-agents 10 and 20. LLM 10 acts as modifier agent to modify the formatted description of the initial traffic scenario. And LLM 20 acts as QA agent to evaluate the quality of the modifier agent's output.

It should be mentioned here that each of these two functionalities might be implemented by a set of interacting LLMs, the modifier agent set comprising a senior modifier agent and one or more junior modifier agents specialized in simpler modifying subtasks, and the QA agent set comprising a senior QA agent and one or more junior QA agents specialized in simpler evaluation subtasks.

Anyway, each agent of such a framework is prompted to fulfil a certain role. These roles could include but are not limited to
- Analyzing the input, e.g. an initial or modified formatted scenario description and a user request,
- Breaking down the overall task into simpler subtasks,
- Distributing subtasks to specialized junior agents,
- translating the user request or subtask identified by other LLM-agent into a concrete change to the input, ideally the change is encoded in a structured format (e.g., a diet or json-file) which can be applied to the scenario using an external tool or by the LLM-agent itself, e.g., insert traffic agent type x at coordinate y,
- analyzing actions/outputs generated by another LLM-agent and suggesting improvements, requesting further iteration or releasing result for output, this applies especially for the QA-agent,
- retrieving a suitable map, given the user prompt
- etc.

Scenario generation can be mapped to a series of modifications starting from an empty map as the initial scenario. This can be done automatically, by using a suitable agent.

To improve performance, the LLMs can be fine-tuned for a specific LLM-agent role in a self-supervised fashion. E.g., for an LLM-agent specialized on inserting vehicles, we can fine tune the underlying LLM by taking samples from a database like nuscenes, and generate input-output pairs by removing vehicles. To improve performance, fine tuning can include optimizing the LLM for tool use. E.g., the LLM can be trained to call an API/function to convert cartesian coordinates to frenet coordinates or vice versa.

The following is a formatted text description of an initial real traffic scenario represented by data set 1. This initial traffic scenario comprises an ego vehicle travelling eastwards on a road with one lane for each direction of travel. The ego vehicle is approaching an intersection with one road crossing perpendicular to its current direction of travel. Aside from the ego vehicle, the scene does not include any other traffic participants:
- Input_Directional_Information: The x and y coordinates' origin is ego vehicle position. X increases towards the right (east), and Y increases towards the top (north). The positive-x axis is towards eastwards, positive-y axis is towards northwards, negative-x axis is towards westwards, and negative-y axis is towards southwards.
- Input vectors:
   {'Agentl': ['EGO_VEHICLE', 0.0, 0.0, 0.0, 2.3, 5.2, 6.0, 'Lane1']}
   {'Lane1': [1, 'Eastwards', 'parallel same', 4.0, 'Unknown', [(-3.1, -0.3, 0.1), (11.9, 1.0, 0.1), (26.3, 2.2, 0.1), (40.8, 3.4, 0.1)]], 'Lane2': [2, 'Westwards', 'parallel_opposite', 3.5, 'Unknown', [(49.6, 0.4, -3.0), (34.7, -0.7, -3.1), (20.6, -1.9, -3.1)]], 'Lane3': [3, 'Northwards', 'perpendicular_upstream', 3.6, 'Unknown', [(27.4, 6.7, 1.7)]]}
   {'Lane2 to Lane3 Connector': ['Lane2', 'Lane3', 'Unknown', 'Right_turn', 'Unknown', [(34.3, -0.8, -3.1), (29.7, 0.8, - 3.9), (27.6, 5.2, 1.7)]]}

The following is a user prompt 2 specifying a wanted modification of the corresponding initial real traffic scenario. This wanted modification comprises the addition of a pedestrian crossing the street the ego vehicle is currently driving on, wherein the pedestrian crosses the street in such a way that he will come into conflict with the movement of the ego vehicle. Such a modification is useful to test a vehicles ability to react to jaywalkers:
Add one or more pedestrian in front of ego at an approximate distance 40m, in such a way that the pedestrians are crossing the ego lane perpendicularly and will obstruct ego travel path.

The following is a first prompt 11 for the modifier agent 10 including the formatted text description of the initial real traffic scenario and the user prompt 2 given above:
You are a traffic scenario editor that edit fix-form traffic scenario descriptions according to the user's natural language instructions.
Input format:
   - Input_Directional_Information: Information about directions will be given.
   - Input_vectors:

```
 {{
 \"Agentl\": [,,,,,,,],
 \"Map\": [,,,,,,,,],
 \"Lane\": [,,,,,,,,,,,,]
 \"Lane_to_Lane_Connector\": [,,,,,,,,,,,,]
 }}
```

Input_scenario:
   Here, the formatted text description of the initial traffic scenario, as given above, has to be included.
   Instruction_format: natural language instruction to modify the scenario.
   User instruction:
      Here, user prompt 2 as given above, has to be included.
      Output format:
      Insights: analyze and summarize the spatial details of the scenario.
      Modification Dict: Based on above summaries, generate a modification diet.

```
 {{\"Action: add or remove or modify\", \"Modified_Agent_Name and
 Type: \", \"Relative_Direction and Distance: \"}}
 
```

Modified_Vectors: Generate a json format describing the attributes of each of the modified agents.

The input prompt 21 for the QA agent 20 comprises a high-level description of the task and a definition of the expected output format including the rating system, as given below:
You are a faithful Quality Assurance (QA) Engineer who checks and finds specific problems and gives detailed corrective actions for the modification work done by ScenarioModifier Engineer.
You are given initial and modified scenarios which contain the agent vectors and lane vectors.
You need to critically check the modification work of ScenarioModifier, find common errors, give explanation on how and where the problem happened, and finally give detailed corrective actions.
Summarize the initial scenario and explain the user's intent. Ask critical questions that help you verify if a critical problem exists.
Ratings: Start with 10 points. Decrease the rating by 1 point for every problem. Output the final rating in below json format. Always output a final rating in below json format.

```
 {{
 \"Final_Rating\": 10.0
 }}
```

Besides, the input prompt 21 for the QA agent 20 comprises the input and the output of the modifier agent 10 together with format definitions for the description of the traffic scenarios and the user prompt. Since this information is already included in the first prompt 11 for modifier agent 10 it is not repeated here.

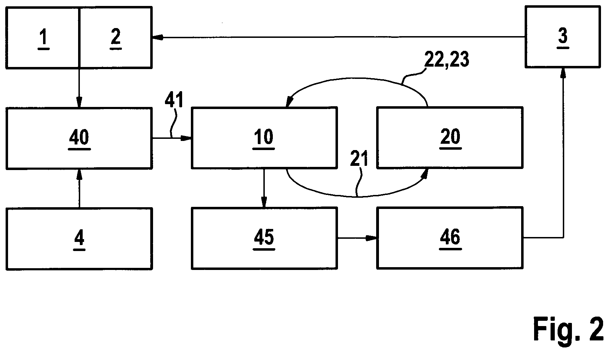

The embodiment of the claimed method for generating data sets as illustrated in **Fig. 2** uses an agentic framework as described in connection with Fig. 1. It starts with an initial data set 1 representing an existing real traffic scenario and a user prompt 2 specifying the wanted modification. However, in case of Fig. 2 this information - initial data set and wanted modification 2 - is used to retrieve best in-context few shot examples which are then included in a first prompt for a modifier agent 10 to increase its performance. The corresponding retrieval process 40 may use an NN to identify appropriate candidates from a given data base 4 of high quality examples. Alternatively, such examples could be chosen by an expert or any competent user. The thus "enriched" first prompt 41 is applied to the modifier agent 10 to generate a formatted description of an accordingly modified traffic scenario. The output of the modifier agent 10 is transferred to a QA agent 20 included in a second prompt 21, this second prompt 21 also including the input 41 of the modifier agent 10. In response to this second prompt 21 the QA agent 20 provides a rating 22 of the modification together with a feedback 23 for the modifier agent 10. This interaction between the modifier agent 10 and the QA agent 20 can be repeated for several rounds until the rating of the modification is above a given threshold. Only then the modifier agent's output is transferred to an agent extractor 45 in order to transform the formatted text description of the modified traffic scenario into a data set usable for training and/or testing of AD functions. Therefore, the generated data set has to meet some format and formal requirements which are checked first, by the agent extractor and then by a simulation framework 46. Only when all these format and formal requirements are met the new data set 3 is provided to the user.

The embodiment of Fig. 2 illustrates that the claimed method may comprise further steps and the claimed system may comprise further components, e.g. regarding the construction of appropriate prompts and the transformation of a modified formatted text descriptions into an appropriate and formally correct data set.

## Claims

1. Computer implemented system (100) for generating data sets (3) representing traffic scenarios to be used for training and/or testing automated driving (AD) functions, said system (100) at least comprising:
one or more processors and a memory that stores one or more programs that are configured to be executed by the one or more processors,
said programs comprising at least one first Large Language Model (LLM) and/or Vision Language Model (VLM) being trained at least on formatted text descriptions of traffic scenarios and on natural language to perform a task given a prompt,
**wherein** said one or more programs include instructions to
• Transform an initial data set (1) into a formatted text description of a corresponding real traffic scenario,
• Construct a first prompt (11) as input for the first LLM or VLM acting as modifier agent (10), wherein the first prompt (11) includes the formatted text description of said real traffic scenario and a user specification of a wanted modification of said real traffic scenario,
• Apply the first prompt to the modifier agent (10) and obtain a modified formatted text description of a modified traffic scenario as output ((12), and
• Transform the modified formatted text description into a corresponding data set (3) representing the modified traffic scenario.

2. Computer implemented system according to claim 1, wherein said one or more programs comprise a set of interacting LLMs and/or VLMs being trained at least on formatted text descriptions of traffic scenarios and on natural language to perform a task given a prompt,
**wherein** said one or more programs include instructions to
• Construct a second prompt (21) as input for a second LLM or VLM acting as quality assurance (QA) agent (20) to evaluate the output of the modifier agent (10), wherein the second prompt (21) includes the input (11) and the output (12) of the modifier agent (10) and at least one quality criterion,
• Apply the second prompt (21) to the QA agent (20) and
i. when the QA agent (20) indicates that the quality criterion is not met,
construct another first prompt (11) for the modifier agent (10) in order to further modify the formatted text description of the given real traffic scenario,
ii. or when the QA agent (20) indicates that the quality criterion is met, transform the modified formatted text description into a corresponding data set (3) representing the modified traffic scenario.

3. Computer implemented system according to anyone of claims 1 or 2, wherein said programs comprise a set of interacting LLMs and/or VLMs being trained at least on formatted text descriptions of traffic scenarios and on natural language to perform a task given a prompt, and wherein the set of interacting LLMs and/or VLMs comprises at least one junior modifier agent specialized in at least one subtask of scenario modification, and wherein the modifier agent is configured to
• analyze the first prompt in order to break down the corresponding task into several subtasks,
• distribute said subtasks to appropriately specialized junior modifier agents,
• merge the outputs of said junior modifier agents in order to generate a modified formatted text description of a modified traffic scenario as output.

4. Computer implemented system according to anyone of claims 2 or 3, wherein the set of interacting LLMs and/or VLMs further comprises at least one junior QA agent specialized in at least one subtask of evaluation, and wherein the QA agent is configured to
• analyze the second prompt in order to break down the corresponding task into several subtasks,
• distribute said subtasks to appropriately specialized junior QA agents
and
• merge the outputs of said specialized junior QA agents in order to check whether the quality criterion is met and to construct another first prompt for the modifier agent, if necessary.

5. Computer implemented system according to anyone of claims 1 to 4, said one or more programs further comprising a first Neural Network (NN) (31) being trained at least on data and on formatted text descriptions of traffic scenarios, wherein the one or more programs include instructions to access said first NN in order to transform the initial data set (1) into a formatted text description of the corresponding real traffic scenario.

6. Computer implemented system according to anyone of claims 1 to 5, further comprising a second NN (35) being trained on data and on formatted text descriptions of traffic scenarios, wherein the one or more programs include instructions to access said second NN (35) in order to transform the modified formatted text description into a corresponding data set (3) representing the modified traffic scenario.

7. Computer implemented method for generating data sets (3) representing traffic scenarios to be used for training and/or testing automated driving (AD) functions,
wherein at least one first Large Language Model (LLM) and/or Vision Language Model (VLM) is used for modification and/or augmentation of initial data sets (1) representing real traffic scenarios,
said first LLM or VLM being trained at least on formatted text descriptions of traffic scenarios and on natural language to perform a task given a prompt, said method comprising the following steps:
• Transforming an initial data set (1) into a formatted text description of a corresponding real traffic scenario,
• Constructing a first prompt (11) as input for the first LLM or VLM acting as modifier agent (10), wherein the first prompt (11) includes the formatted text description of said real traffic scenario and a user specification of a wanted modification of said real traffic scenario,
• Applying the first prompt (11) to the modifier agent (10) and obtaining a modified formatted text description of a modified traffic scenario as output (12),
• transforming the modified formatted text description into a corresponding data set (3) representing the modified traffic scenario.

8. Computer implemented method according to claim 7, wherein a set of interacting LLMs and/or VLMs is used for modification and/or augmentation of initial data sets (1) representing real traffic scenarios,
said LLMs and/or VLMs being trained at least on formatted text descriptions of traffic scenarios and on natural language to perform a task given a prompt, said method further comprising the following steps:
• Constructing a second prompt (21) as input for a second LLM or VLM acting as the quality assurance (QA) agent (20) to evaluate the output of the modifier agent (10), wherein the second prompt (21) includes the input (11) and the output (12) of the modifier agent (10) and at least one quality criterion,
• Applying the second prompt (21) to the QA agent (20) and
i. when the QA agent (20) indicates that the quality criterion is not met,
constructing another first prompt (11) for the modifier agent (10) in order to further modify the formatted text description of the given real traffic scenario,
ii. or when the QA agent (20) indicates that the quality criterion is met, transforming the modified formatted text description into a corresponding data set (3) representing the modified traffic scenario.

9. Computer implemented method for training and/or testing automated driving (AD) functions, especially prediction functions and planning functions, wherein data sets generated by a system and/or method according to anyone of the preceding claims are used as training data sets or evaluation and testing data sets.

10. Computer implemented automated driving (AD) function, especially for prediction of traffic scene development and behavior planning for single traffic participants, being trained, tested and/or evaluated on data sets generated by a system and/or method according to anyone of preceding claims 1 to 8.
